# DEMANDE DE BREVET EUROPEEN

(11) **EP 4 183 673 A1**
(43) Date de publication de la demande: **24.05.2023**
(21) Numéro de dépôt: 22207787.7
(22) Date de dépôt: 16.11.2022
(51) Int. Cl.: B63H 5/08, B60K 6/20, B63H 20/00, B63H 21/20, B63H 21/21

(54) **SYSTEME DE CONTROLE DE LA MOTORISATION D'UN BATEAU A MOTORISATION HYBRIDE**

(30) Priorité: 22.11.2021 FR 2112346
(71) Demandeur: Bluenav, 33120 Arcachon (FR)
(72) Inventeur: FROUIN, Hervé, 33120 ARCACHON (FR)
(74) Mandataire: Aquinov

(57) **Abrégé**

L'invention concerne un système de contrôle (2) de la motorisation d'un bateau (1) à motorisation hybride, le système comportant un premier groupe motopropulseur comprenant un premier propulseur (31) entrainé par un premier moteur (41) et un deuxième groupe motopropulseur comprenant un deuxième propulseur (32) entrainé par un deuxième moteur (42), le type du premier groupe motopropulseur étant distinct du type du deuxième groupe motopropulseur, le système comportant des organes de contrôle (71, 72) des premier et deuxième groupes motopropulseurs, au moins une première unité d'acquisition (61) apte à estimer un régime du premier propulseur et une unité de contrôle (8) agencée pour déterminer une consigne de régime (P72) du deuxième moteur à partir du régime estimé (RPM41) par la première unité d'acquisition et des commandes requises via les organes de contrôle et pour appliquer ladite consigne déterminée au deuxième moteur.

## Description

L'invention concerne le domaine de la propulsion des bateaux. Plus précisément, l'invention concerne le domaine des bateaux à propulsion hybride.

Les bateaux, et notamment les voiliers et les catamarans, peuvent comporter de façon classique une paire de propulseurs, par exemple des hélices, entrainés chacun par un moteur thermique, par exemple disposés de part et d'autre de leur coque. Cette paire de propulseurs permet de piloter la trajectoire du bateau, d'allonger l'autonomie de navigation et de pallier l'absence de vent. Chaque moteur est relié à son propulseur par un système de transmission du couple du moteur à ce propulseur, l'ensemble formant un groupe motopropulseur. Chaque système de transmission peut notamment par exemple comporter un réducteur/inverseur permettant d'adapter le régime du moteur et son sens de rotation. Chaque groupe motopropulseur est usuellement contrôlé par un levier ou une manette permettant de provoquer une variation du régime et du sens de rotation du propulseur entrainé par le moteur de ce groupe. Ces manettes sont généralement juxtaposées, de sorte que le pilote puisse contrôler de façon simultanée et identique les deux groupes motopropulseurs, avec une seule main. Une seule variation angulaire de ces manettes entraine ainsi une réponse identique des deux propulseurs, le bateau se déplaçant ainsi en ligne droite.

Or, dans le cadre d'une hybridation du bateau, par exemple où l'un des moteurs thermiques serait remplacé par un moteur électrique, cette facilité de pilotage n'est plus accessible. En effet, la réponse d'un moteur électrique à une variation angulaire donnée de sa manette est sensiblement différente de celle du moteurthermique pour la même variation angulaire de sa manette. Il est en effet connu que la puissance développée par un moteur électrique est sensiblement linéaire avec une montée en régime du moteur, pour des très bas régimes, puis décroit lentement, tandis que la puissance développée par un moteur thermique présente plutôt un profil de courbe en cloche. En outre, le sens de rotation du moteur électrique peut généralement être inversé tandis qu'un moteur thermique ne permet qu'un seul sens de rotation, et requiert dès lors un inverseur.

Dès lors, une variation angulaire simultanée des deux manettes, par une seule main, entrainerait deux propulsions distinctes et donc une dérive de l'orientation du bateau vis-à-vis de l'orientation requise et un écart entre l'accélération requise et l'accélération réelle du bateau. Le pilote du bateau devrait ainsi corriger la variation angulaire de l'une des manettes pour retrouver un comportement homogène des deux propulseurs.

Ce problème peut être généralisé à d'autres cas, le pilote du bateau s'attendant à une propulsion homogène de chacun des propulseurs quelle que soit les types de groupe motopropulseur employés, leur nombre ou la manière dont il pilote le bateau. En effet, l'un des moteurs peut également participer à l'entrainement d'un groupe électrogène, d'un groupe de froid ou d'un équipement électronique du bateau, voire à la charge d'une source d'alimentation électrique de l'autre moteur, ce qui vient impacter ses performances. L'ancienneté ou les caractéristiques du moteur, la charge du bateau lui-même et les conditions climatiques peuvent également impacter les performances de ce moteur. La correction qu'il faut appliquer à la variation angulaire de la manette de ce moteur n'est donc pas la même selon les circonstances, ce qui complexifie la tâche du pilote.

On notera en outre que ce problème n'est pas limité à une hybridation thermique/électrique des moteurs du bateau, mais se pose dès lors que l'un des groupes motopropulseurs du bateau est de type différent de celui d'un autre groupe motopropulseur de ce bateau. C'est notamment le cas lorsque les moteurs de ces groupes sont de types différents et/ou présentent des caractéristiques, des éléments et/ou des âges différents, et/ou lorsque les systèmes de transmission du couple moteur vers le propulseur sont distincts d'un groupe à l'autre, par exemple lorsque l'un des groupes seulement est équipé d'un réducteur.

Il existe ainsi un besoin pour un système de contrôle de la motorisation d'un bateau à motorisation hybride, c'est-à-dire comportant deux groupes motopropulseurs de types distincts, palliant les inconvénients cités, et permettant d'obtenir un comportement sensiblement identique pour chacun des propulseurs de ce bateau en réponse à une même commande exercée par les organes de contrôle sur ces groupes, quelle que soit les conditions endogènes et exogènes de circulation du bateau.

La présente invention se place dans ce contexte et vise à répondre à ce besoin.

A ces fins, l'invention a pour objet un système de contrôle de la motorisation d'un bateau à motorisation hybride, le système comportant un premier groupe motopropulseur comprenant un premier propulseur entrainé par un premier moteur et un deuxième groupe motopropulseur comprenant un deuxième propulseur entrainé par un deuxième moteur, le type du premier groupe motopropulseur étant distinct du type du deuxième groupe motopropulseur, le système comportant un organe de contrôle du premier groupe motopropulseur et un organe de contrôle du deuxième groupe motopropulseur, au moins une première unité d'acquisition apte à estimer un régime du premier propulseur et une unité de contrôle agencée pour déterminer une consigne de régime du deuxième moteur à partir du régime du premier propulseur estimé par la première unité d'acquisition, d'une commande requise via l'organe de contrôle du premier groupe motopropulseur et d'une commande requise via l'organe de contrôle du deuxième groupe motopropulseur et pour appliquer ladite consigne déterminée au deuxième moteur.

On comprend ainsi que l'unité de contrôle peut modéliser, via le régime estimé par la première unité d'acquisition, le comportement du premier propulseur en réponse à une demande exprimée via l'organe de contrôle du premier groupe motopropulseur, par exemple selon différents cas de fonctionnement. Le ou chaque modèle permettra ainsi d'exprimer la réponse du premier propulseur à une action exercée par cet organe de contrôle, de sorte que l'unité de contrôle puisse déterminer une loi de correction à appliquer à une action exercée par l'autre organe de contrôle, afin que le comportement du deuxième propulseur en réponse à une même demande exprimée via l'organe de contrôle du deuxième groupe motopropulseur soit homogène à celui premier propulseur, dans les mêmes conditions. L'unité de contrôle pourra ainsi déterminer directement le régime du deuxième moteur à partir de cette loi de correction, ou en variante déterminer d'abord le régime du deuxième propulseur à partir de cette loi de correction pour ensuite déterminer le régime du deuxième moteur. En d'autres termes, la loi de correction permettant d'obtenir la consigne de régime du deuxième moteur permet au deuxième groupe motopropulseur de mimer le comportement du premier groupe motopropulseur, de sorte que les propulseurs de ces groupes développent une poussée de façon homogène, évitant alors au pilote de corriger lui-même ses actions sur les organes de contrôle.

Dans l'invention, on entend par « type d'un groupe motopropulseur distinct du type d'un autre groupe motopropulseur » le fait que les moteurs de ces groupes soient de types différents et/ou présentent des caractéristiques, des éléments et/ou des âges différents, et/ou le fait que les systèmes de transmission de ces groupes soient de types différents et/ou présentent des caractéristiques, des éléments et/ou des âges différents, traduisant ainsi des différents de comportement entre les deux groupes. Ce sera par exemple le cas lorsque le premier moteur est un moteur thermique et le deuxième moteur est un moteur électrique ou encore lorsque les deux moteurs sont des moteurs thermiques mais que les réducteurs associés à ces moteurs sont de types différents.

Avantageusement, l'organe de contrôle du premier groupe motopropulseur et/ou du deuxième groupe motopropulseur pourra être un organe de contrôle manuel, mécanique, comme un levier ou une manette, ou électronique, comme une interface électronique. En variante, il pourra s'agir d'un organe de contrôle automatique.

Selon un exemple de réalisation de la présente invention, dans le cas où l'un des premier et deuxième moteurs est un moteur thermique, l'organe de contrôle de ce moteur thermique pourra être un levier ou une manette commandant le degré d'ouverture des gaz du moteur thermique. L'organe de contrôle du moteur thermique peut par exemple être relié à un contrôleur du moteur thermique, lequel est apte à contrôler le degré d'ouverture ou de fermeture d'une valve d'admission des gaz du moteur thermique en fonction de l'angle appliqué audit levier ou à ladite manette.

Selon un exemple de réalisation de la présente invention, dans le cas où l'un des premier et deuxième moteurs est un moteur électrique, l'organe de contrôle de ce moteur électrique pourra être un levier ou une manette contrôlant la vitesse de rotation du moteur électrique. L'organe de contrôle du moteur électrique peut par exemple être relié à un variateur électronique de vitesse apte à contrôler la fréquence d'un courant alternatif délivré au moteur électrique en fonction de l'angle appliqué audit levier ou à ladite manette.

Dans la présente invention, on entend ainsi par commande requise via un organe de contrôle d'un groupe motopropulseur, tant l'action appliquée par un pilote du bateau sur cet organe de contrôle comme l'angle ou l'amplitude appliquée à un levier ou une manette, que la consigne de régime dérivée de cette action, qu'il s'agisse de la consigne de régime du moteur de ce groupe, comme un nombre de tours par minute, d'une demande en puissance ou en couple audit moteur ou encore d'un degré d'ouverture d'une valve ou d'une vitesse de rotation dudit moteur, ou qu'il s'agisse de la consigne de régime du propulseur de ce groupe, comme une demande en poussée, voire une consigne de vitesse ou d'accélération du bateau.

Avantageusement, la première unité d'acquisition pourra être agencée pour estimer de façon périodique le régime du premier propulseur et pour transmettre ladite estimation à l'unité de contrôle. Le cas échéant, l'unité de contrôle est agencée pour déterminer périodiquement ladite consigne de régime du deuxième moteur à partir de chaque estimation reçue de la première unité d'acquisition.

Par exemple, la première unité d'acquisition pourra comporter un capteur de régime du premier moteur. Il pourra par exemple s'agir, dans le cas d'un moteur thermique, d'un capteur embarqué dans le moteur thermique, notamment un capteur de type inductif ou à effet Hall placé au niveau du moteur thermique ou au niveau d'un alternateur dudit moteur thermique. Le cas échéant, l'unité d'acquisition pourra être agencée pour estimer le régime du premier propulseur à partir du régime mesuré du premier moteur, les caractéristiques du système de transmission du couple moteur au premier propulseur étant connues. De façon alternative, la première unité d'acquisition pourra comporter un calculateur d'un contrôleur du premier moteur apte à estimer un régime du premier moteur, cette information étant disponible ou calculable par ce calculateur. En variante, la première unité d'acquisition pourra comporter un capteur de régime du premier propulseur, par exemple agencé au niveau d'un arbre du premier propulseur. Dans ce cas, le régime du premier propulseur est directement estimé par la première unité d'acquisition.

Avantageusement, l'unité de contrôle est agencée pour déterminer une consigne de régime du premier moteur à partir de ladite commande requise via l'organe de contrôle du premier groupe motopropulseur et pour appliquer simultanément lesdites consignes de régime déterminées respectivement au premier et au deuxième moteurs. Par exemple, dans le cas où le premier moteur est un moteur thermique, l'unité de contrôle est configurée pour délivrer au contrôleur du moteur thermique un signal présentant une valeur commandant le degré d'ouverture des gaz, ladite valeur étant déterminée par l'unité de contrôle en fonction de ladite consigne de régime du moteur thermique, laquelle est déterminée à partir de l'amplitude ou du degré de manœuvre dudit levier ou de ladite manette de contrôle du moteur thermique.

Avantageusement, lorsque les commandes requises via les organes de contrôle sont identiques, l'unité de contrôle est agencée pour déterminer ladite consigne de régime du deuxième moteur de sorte que le régime du deuxième propulseur soit sensiblement identique à celui du premier propulseur. Dès lors, la puissance, développé par le deuxième propulseur est sensiblement identique à celle, développé par le premier propulseur, de sorte que les forces de propulsion générées par les premier et deuxième propulseurs soient sensiblement identiques, tel qu'attendu par le pilote du bateau.

Dans un exemple de réalisation de l'invention, le système comporte une unité de production d'énergie électrique à partir du premier groupe motopropulseur. Le cas échéant, l'unité de contrôle est agencée pour déterminer ladite consigne de régime du deuxième moteur en fonction du couple résistant résultant de la charge exercée par l'unité de production d'énergie électrique sur le premier groupe motopropulseur. En d'autres termes, le comportement du deuxième propulseur reste identique au comportement du premier propulseur, même si une charge est exercée par ladite unité de production d'énergie électrique sur le premier moteur. Avantageusement, l'unité de production d'énergie électrique peut comporter une unité de stockage d'énergie électrique et une unité de recharge de ladite unité de stockage d'énergie électrique à partir d'un travail mécanique réalisé par le premier groupe motopropulseur. Par exemple, dans le cas où le deuxième moteur est un moteur électrique, ladite unité de stockage d'énergie électrique peut être apte à alimenter électriquement ce moteur électrique ou en variante un groupe électrogène embarqué dans le bateau.

Avantageusement, l'unité de contrôle comporte une mémoire dans laquelle sont stockés au moins deux modèles distincts de régime du premier propulseur en fonction de la valeur d'une commande requise via l'organe de contrôle du premier groupe motopropulseur. Le cas échéant, l'unité de contrôle est agencée pour sélectionner l'un desdits modèles de régime du premier propulseur à partir du régime du premier propulseur estimé par la première unité d'acquisition et de ladite commande requise via l'organe de contrôle du premier groupe motopropulseur et pour déterminer ladite consigne de régime du deuxième moteur à partir du modèle de régime du premier propulseur sélectionné et de ladite commande requise via l'organe de contrôle du deuxième groupe motopropulseur. Chaque modèle peut ainsi définir un comportement du premier propulseur en réponse à une demande exprimée via l'organe de contrôle du premier groupe motopropulseur, selon un cas de fonctionnement donné, correspondant à une charge du premier moteur donnée, un état de fonctionnement du premier moteur donné, une charge du bateau donnée et/ou des conditions climatiques données. Le couple commande exprimée via l'organe de contrôle du premier groupe motopropulseur - régime du premier propulseur estimé par la première unité d'acquisition permet ainsi à l'unité de contrôle de déterminer quel est le modèle applicable à la situation courante et de définir ensuite une consigne de régime du deuxième moteur, et donc du deuxième propulseur, permettant de mimer ce modèle.

Avantageusement, le système peut comporter une deuxième unité d'acquisition apte à estimer un régime du deuxième propulseur, au moins deux modèles distincts de régime du deuxième propulseur en fonction de la valeur d'une commande requise via l'organe de contrôle du deuxième groupe motopropulseur étant stockés dans la mémoire de l'unité de contrôle. Le cas échéant, l'unité de contrôle est agencée pour sélectionner l'un desdits modèles de régime du deuxième propulseur à partir du régime du deuxième propulseur estimé par la deuxième unité d'acquisition et pour déterminer ladite consigne de régime du deuxième moteur à partir du modèle de régime du premier propulseur sélectionné, du modèle de régime du deuxième propulseur sélectionné et de ladite commande requise via l'organe de contrôle du deuxième groupe motopropulseur. Le comportement du deuxième propulseur pouvant lui-même varier selon son état de fonctionnement, son âge et les conditions extérieures, ces caractéristiques permettent de prendre en compte ces variations afin d'obtenir des comportements des premier et deuxième propulseurs qui soient homogènes, quelle que soit la situation.

De préférence, la première unité d'acquisition est agencée pour estimer de façon périodique le régime du premier propulseur et pour transmettre ledit régime estimé à l'unité de contrôle. Le cas échéant, l'unité de contrôle est agencée pour déterminer si le doublet formé par ledit régime estimé et par ladite commande, notamment correspondant audit régime estimé, requise via l'organe de contrôle du premier groupe motopropulseur correspond à l'un des modèles de régime du premier propulseur stockés dans sa mémoire et pour, en cas de correspondance, sélectionner ledit modèle de régime correspondant stocké dans sa mémoire, et pour, dans le cas contraire, déclencher un apprentissage d'un nouveau modèle de régime du premier propulseur et stocker ledit nouveau modèle de régime du premier propulseur dans sa mémoire.

Par exemple, la correspondance entre ledit doublet et l'un des modèles de régime du premier propulseur pourra être établie par l'unité de contrôle en sélectionnant chaque modèle stocké dans sa mémoire pour lequel l'écart entre ledit régime estimé et la valeur dudit modèle pour ladite commande est inférieur à un seuil donné et en sélectionnant le modèle pour lequel cet écart est minimum. En variante, l'unité de calcul pourra être agencée pour mettre en œuvre un algorithme d'apprentissage automatique, par exemple du type classifieur, permettant de classer ledit doublet parmi l'ensemble des modèles stockés dans sa mémoire.

De façon alternative ou cumulative, un ou une pluralité de modèles de régime du premier propulseur pourra être établie au préalable par l'unité de contrôle en soumettant le premier moteur à différentes commandes et pour différentes charges et/ou différentes conditions de fonctionnement.

Avantageusement, l'unité de contrôle pourra être agencée pour mettre en œuvre un algorithme d'apprentissage automatique pour apprendre ledit nouveau régime du premier propulseur. En variante, l'unité de contrôle est agencée pour stocker dans sa mémoire chaque régime estimé du premier propulseur, ultérieurement au déclenchement de l'apprentissage, correspondant à une nouvelle valeur de ladite commande, ce doublet estimation - commande étant stocké en étant associé audit nouveau modèle.

Le cas échéant, l'unité de contrôle pourra être agencée pour déterminer une loi de correction de ladite commande requise via l'organe de contrôle du deuxième groupe motopropulseur à partir du modèle de régime du premier propulseur sélectionné et éventuellement à partir du modèle de régime du deuxième propulseur sélectionné, la commande corrigée à l'aide de ladite loi de correction formant ladite consigne de régime du deuxième moteur. Par exemple, l'unité de contrôle pourra être agencée pour mettre en œuvre un algorithme de type méthode des moindres carrés, régression linéaire ou logistique, apprentissage automatique afin de déterminer ladite loi de correction.

Avantageusement, le premier moteur peut être un moteur thermique et le deuxième moteur peut être un moteur électrique.

L'invention a également pour objet un bateau à motorisation hybride comportant un système de contrôle de sa motorisation selon l'invention.

La présente invention est maintenant décrite à l'aide d'exemples uniquement illustratifs et nullement limitatifs de la portée de l'invention, et à partir des dessins annexés, dessins sur lesquels les différentes figures représentent :
[Fig. 1] représente, schématiquement et partiellement, un bateau à motorisation hybride équipé d'un système de contrôle de cette motorisation selon un exemple de réalisation de l'invention ;
[Fig. 2A] représente, schématiquement et partiellement, des modèles de régime d'un moteur thermique ; et
[Fig. 2B] représente, schématiquement et partiellement, un modèle de régime d'un moteur électrique.

Dans la description qui suit, les éléments identiques, par structure ou par fonction, apparaissant sur différentes figures conservent, sauf précision contraire, les mêmes références.

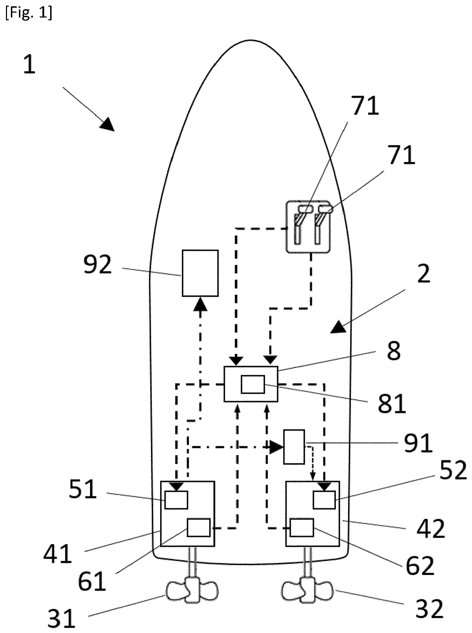

On a représenté en [Fig. 1] une vue schématique d'un bateau 1 à motorisation hybride selon un exemple de réalisation de l'invention. Le bateau 1 est équipé d'un système de contrôle 2 de la motorisation du bateau 2.

Le système 2 comporte ainsi un premier propulseur 31 entrainé par un moteur thermique 41 et un deuxième propulseur 32 entrainé par un moteur électrique 42.

Dans l'exemple décrit, le moteur thermique 41 est pourvu d'un contrôleur 51 apte à contrôler le degré d'ouverture d'une valve d'admission des gaz du moteur thermique 41 en fonction d'une instruction de demande en puissance du moteur thermique 41 qu'il reçoit. Le contrôleur 51 permet ainsi, en fonction de l'instruction qu'il reçoit, de provoquer une montée, et éventuellement une descente, de régime du moteur thermique 41 et donc de contrôler la poussée générée par le premier propulseur 31.

Dans l'exemple décrit, le moteur électrique 42 est pourvu d'un variateur électronique de vitesse 52 apte à contrôler la fréquence d'un courant alternatif délivré au moteur électrique 42 en fonction d'une instruction de demande en puissance du moteur électrique 42 qu'il reçoit. Le variateur 52 permet ainsi, en fonction de l'instruction qu'il reçoit, de provoquer une montée, et éventuellement une descente, de régime du moteur électrique 42 et donc de contrôler la poussée générée par le deuxième propulseur 32.

Par ailleurs, chacun des moteurs thermique 41 et électrique 42 embarque un capteur 61, respectivement 62, apte à estimer ou mesurer un régime de ce moteur, mesuré en tours par minute (ou rpm, de l'anglais « revolutions per minute). Pour le moteur thermique 41, il pourra par exemple s'agir d'un capteur PMH, ou capteur point mort haut. Pour le moteur électrique 42, le régime pourra être déterminé directement par le variateur 52. Dans cet exemple, le régime du moteur 41, respectivement 42, mesuré par le capteur 61, respectivement 62, est assimilé au régime du premier propulseur 31, respectivement du deuxième propulseur 32, étant ainsi considéré que les systèmes de transmission des couples moteur aux propulseurs 31 et 32 n'ont aucune influence sur ces régimes. Il va de soi que l'invention n'est pas limitée à ce mode de réalisation et qu'on pourra envisager des conversions du régime moteur vers le régime propulseur, et inversement, tenant compte des caractéristiques de ces systèmes de propulsion, et notamment de la présence de réducteurs, sans sortir du cadre de la présente invention.

Afin de permettre au pilote du bateau 1 de contrôler la poussée exercée par l'un et/ou l'autre des premier et deuxième propulseurs 31 et 41, le système 2 comporte une paire d'organes de contrôle manuel 71 et 72, formés par des manettes 71 et 72 agencées côte à côte, de sorte que le pilote puisse les manipuler conjointement avec une seule main. L'angle qu'il applique à l'une et/ou l'autre des manettes 71 et 72 traduit ainsi une demande en puissance du moteur thermique 41, respectivement du moteur électrique 42.

Le système 2 comporte par ailleurs une unité de stockage d'énergie 91 et d'alimentation du moteur électrique 42, associée à une unité de recharge susceptible d'être montée en charge du moteur thermique 41. Lorsque l'unité de recharge est activée, l'unité de stockage d'énergie 91 est rechargée à partir du travail mécanique développé par le moteur thermique 41, de sorte que cette unité 91 puisse alimenter en continu le moteur électrique 42.

Le système 2 comporte également un groupe électrogène 92 susceptible d'être monté en charge du moteur thermique 42, et permettant par exemple d'alimenter un groupe de froid, une climatisation ou un système de chauffage du bateau 1.

Le système 2 comporte une unité de contrôle 8 reliée aux manettes 71 et 72 pour recevoir cette ou ces demandes en puissance.

Dans l'exemple décrit, l'unité de contrôle 8 comporte une mémoire 81 dans laquelle sont stockées une pluralité de modèles de régime ME1, ME2 du moteur électrique 42 et une pluralité de modèles de régime MT1, MT2 et MT3 du moteur thermique 41, chaque modèle de régime d'un moteur représentant l'évolution de la valeur du régime dudit moteur, mesurée en tours par minute RPM, en fonction de la valeur d'une demande en puissance P requise via la manette contrôlant ce moteur, selon une ou plusieurs conditions de fonctionnement de ce moteur.

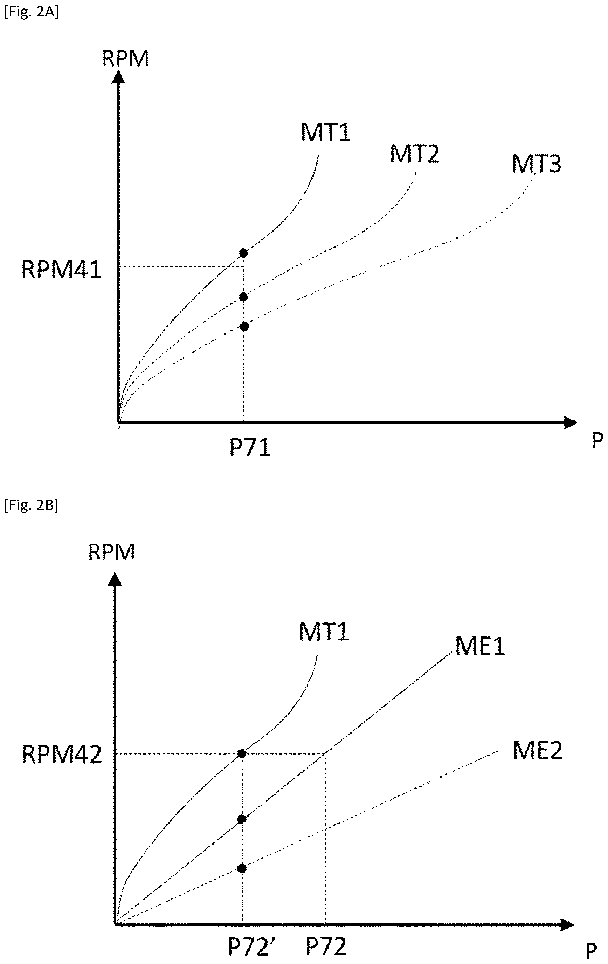

On a représenté en [Fig. 2A] des modèles de régime MT1, MT2 et MT3 du moteur thermique selon trois exemples de conditions de fonctionnement distincts.

Le modèle MT1 correspond à une montée en régime du moteur thermique 41 dans des conditions normales de fonctionnement. Le modèle MT2 correspond à une montée en régime du moteur thermique lorsque l'unité de recharge de l'unité de stockage d'énergie 91 est montée en charge du moteur thermique 41. Le modèle MT3 correspond à une montée en régime du moteur thermique lorsque l'unité de recharge de l'unité de stockage d'énergie 91 et le groupe électrogène 92 sont montés en charge du moteur thermique 41.

On a représenté en [Fig. 2B] des modèles de régime ME1 et ME3 du moteur électrique selon deux exemples de conditions de fonctionnement distincts.

Le modèle ME1 correspond à une montée en régime du moteur électrique 42 dans des conditions normales de fonctionnement. Le modèle ME2 correspond à une montée en régime du moteur électrique 42 dans des conditions climatiques dégradées, par exemple pour une température ambiante éloignée de la température nominale de fonctionnement du moteur.

Bien que seuls certains modèles de régime aient été représentés dans les [Fig. 2A] et [Fig. 2B], il va de soi que l'invention n'est pas limitée à ce nombre de modèles, ni-même à ces seuls exemples de conditions de fonctionnement. On pourrait notamment envisager un nombre supérieur de modèles de régime du moteur thermique et/ou du moteur électrique et/ou d'autres exemples de conditions de fonctionnement comme l'âge de ces moteurs ou encore le poids en charge du bateau 2.

Dans l'exemple décrit, ces différents modèles ont été établis au préalable par l'unité de contrôle 8, en plaçant chacun des moteurs 41 et 42 dans les conditions de fonctionnement correspondant à ces modèles et en soumettant ces moteurs à une pluralité de demandes en puissance. Pour chaque demande en puissance, les capteurs de régime 61, 62 mesurent les régimes des moteurs 41 et 42. Les doublets P-RPM, c'est-à-dire demande en puissance P - régime RPM du moteur mesuré par son capteur pour cette demande P, obtenus pour un même exemple de conditions de fonctionnement permettent alors à l'unité de contrôle de déterminer le modèle de régime associé à cet exemple de conditions de fonctionnement, par exemple par une méthode des moindres carrés, une méthode du modèle ou un filtre de Kalman.

On va maintenant décrire un mode de fonctionnement du système de contrôle 2 et de l'unité de contrôle 8.

Lorsque le pilote du bateau 1 manipule les manettes 71 et 72 pour provoquer une poussée par les propulseurs 31 et 32, les angles de ces manettes sont fournis à l'unité de contrôle 8.

L'unité de contrôle 8 est agencée, d'une part, pour déterminer une consigne de régime, c'est-à-dire dans l'exemple décrit, une consigne P71 de demande en puissance du moteur thermique 41 à partir de l'angle appliqué par le pilote du bateau à la manette 71 et pour délivrer une instruction contenant ladite consigne au contrôleur 51 du moteur thermique.

On note ici que, pour les modèles MT1 à MT3, une même consigne P71 correspond à différents valeurs de régime du moteur thermique 41, comme montré en [Fig. 2A]. De même, pour un modèle du moteur thermique 41 et un modèle du moteur électrique 42, une même consigne P72' correspond à des valeurs différentes de régime de ce moteur thermique 41 et de ce moteur électrique 42, comme montré en [Fig. 2B] sur laquelle a été reporté le modèle MT1 en plus des modèles ME1 et ME2. Dès lors, ces différences de comportement peuvent induire en erreur le pilote du bateau 2, qui s'attend à une réponse homogène des deux moteurs 41 et 42 lorsqu'il manipule les manettes 71 et 72.

Afin de pallier ce problème, l'unité de contrôle 8 est également agencée, d'autre part, pour déterminer une consigne de demande en puissance P72 du moteur électrique 42 à partir de l'angle appliqué par le pilote du bateau à la manette 72, du régime RPM41 du moteur thermique 41 mesuré par le capteur 61 et du régime RPM42 du moteur électrique 42 mesuré par le capteur 62, et pour délivrer une instruction contenant ladite consigne au variateur 52, de façon simultanée avec la fourniture de l'instruction au contrôleur 51.

Plus précisément, le doublet P71-RPM41 permet à l'unité de contrôle 8 de sélectionner, dans sa mémoire 81, un modèle de régime correspondant au fonctionnement du moteur thermique 41 dans les conditions actuelles. Par exemple, l'unité de contrôle 8 est agencée pour sélectionner le modèle de régime du moteur thermique 41 pour lequel l'écart entre le régime mesuré RPM41 et la valeur du modèle correspondant à la consigne P71 est minimum et inférieur à un seuil donné. Dans l'exemple de la [Fig. 2A], il s'agit ainsi du modèle MT1.

Il est à noter que les mesures de régime par les capteurs 61 et 62 sont opérées de façon périodique, de sorte que l'unité de contrôle 8 peut sélectionner, dans sa mémoire 81, un modèle de régime correspondant au fonctionnement du moteur électrique 42, à l'aide des différentes mesures de régime RPM42 réalisées par le capteur 62. Dans l'exemple de la [Fig. 2B], il s'agit du modèle ME1.

L'unité de contrôle 8 peut ainsi déterminer une loi de correction permettant, à partir de l'angle appliqué par le pilote du bateau à la manette 72, d'obtenir une consigne de demande en puissance P72 telle que le régime RPM42 du moteur électrique 42 mesuré par le capteur 62 soit sensiblement identique au régime du moteur thermique 41 qui serait mesuré pour un même angle appliqué à la manette 71, dans les mêmes conditions de fonctionnement.

Cette loi de correction peut par exemple être déterminée, en temps réel ou au préalable, par l'unité de contrôle 8 par une méthode des moindres carrés, une méthode du modèle ou encore un filtre de Kalman.

La consigne P72 ainsi obtenue est appliquée au moteur électrique 42, via son variateur 52, tandis que la consigne P71 est appliquée simultanément au moteur thermique 41, via son contrôleur 51.

La correction appliquée à la consigne P72 permet ainsi au moteur électrique 42 de mimer le comportement du moteur thermique 41 selon les conditions de fonctionnement actuelles. Par exemple, si les manettes 71 et 72 sont manipulées par le pilote du bateau 1 avec un même angle, le pilote 1 s'attend donc à ce que chacun des propulseurs 31 et 32 provoquent une poussée identique. La consigne P72 obtenue par l'unité de contrôle permet ainsi d'obtenir un régime du moteur électrique 42 sensiblement identique à celui du moteur thermique 41.

Les mesures de régime par les capteurs 61 et 62 étant opérées de façon périodique, la consigne P72 est ainsi corrigée de façon régulière par l'unité de contrôle 8. En outre, l'unité de contrôle 8 peut sélectionner un autre modèle de régime du moteur thermique 41 et/ou du moteur électrique 42 si elle constate une dérive importante entre les mesures opérées par ces capteurs et le ou les modèles sélectionnés jusqu'ici.

Dans un exemple de réalisation optionnel, dans le cas où l'unité de contrôle 8 serait incapable de sélectionner un modèle de régime pour l'un des moteurs 41 ou 42 à partir d'une mesure de régime obtenue par l'un des capteurs 61 ou 62, l'unité de contrôle 8 peut alors déclencher un apprentissage d'un nouveau modèle de régime pour ce moteur. Il peut par exemple s'agir d'une situation non prévue dans les différents exemples de conditions de fonctionnement ayant permis d'établir les modèles de régime stockés dans la mémoire 81, l'écart entre un régime mesuré et la valeur de chaque modèle pour la commande actuelle restant supérieur à un seuil donné.

L'unité de contrôle 8 stocke alors tous les doublons mesure - commande jusqu'à obtenir un nombre d'échantillons suffisants pour établir un nouveau modèle de régime.

La description qui précède explique clairement comment l'invention permet d'atteindre les objectifs qu'elle s'est fixée, à savoir obtenir un comportement sensiblement identique pour chacun des moteurs d'un bateau à motorisation hybride, quelle que soit les conditions endogènes et exogènes de circulation du bateau, en proposant un système de contrôle de la motorisation de ce bateau dans lequel une unité de contrôle corrige une consigne de régime de l'un des moteurs à partir d'une mesure de régime réalisée sur l'autre moteur.

En tout état de cause, l'invention ne saurait se limiter aux modes de réalisation spécifiquement décrits dans ce document, et s'étend en particulier à tous moyens équivalents et à toute combinaison techniquement opérante de ces moyens. On pourra en particulier envisager d'autres modes de contrôle manuel des moteurs, et notamment d'autres d'organes de contrôle. On pourra également envisager de déterminer la consigne de régime du moteur électrique à partir d'une information dérivée de la commande appliquée sur l'organe de contrôle du moteur électrique. On pourra également envisager d'autres types de capteur que ceux décrit, et notamment un capteur additionnel, par exemple indépendant du moteur thermique ou du moteur électrique. On pourra encore envisager de prendre en compte l'orientation du bateau souhaitée par le pilote dans la détermination de la consigne de régime du moteur électrique. On pourra encore envisager d'autres méthodes de modélisation du comportement de l'un ou l'autre des moteurs ou de détermination de la loi de correction, et notamment des méthodes employant des algorithmes d'apprentissage automatique. On pourra encore envisager d'embarquer le système de contrôle selon l'invention sur différents types de bateaux, et notamment des bateaux de type voilier, catamaran, trimaran, des bateaux à motorisation in-bord ou hors-bord, des bateaux bimoteurs ou pourvu de plus de deux moteurs.

## Revendications

1. Système de contrôle (2) de la motorisation d'un bateau (1) à motorisation hybride, le système comportant un premier groupe motopropulseur comprenant un premier propulseur (31) entrainé par un premier moteur (41) et un deuxième groupe motopropulseur comprenant un deuxième propulseur (32) entrainé par un deuxième moteur (42), le type du premier groupe motopropulseur étant distinct du type du deuxième groupe motopropulseur, le système comportant un organe de contrôle (71) du premier groupe motopropulseur et un organe de contrôle (72) du deuxième groupe motopropulseur, au moins une première unité d'acquisition (61) apte à estimer un régime du premier propulseur et une unité de contrôle (8) agencée pour déterminer une consigne de régime (P72) du deuxième moteur à partir du régime (RPM41) du premier propulseur estimé par la première unité d'acquisition, d'une commande requise via l'organe de contrôle du premier groupe motopropulseur et d'une commande requise via l'organe de contrôle du deuxième groupe motopropulseur et pour appliquer ladite consigne déterminée au deuxième moteur.

2. Système 2) selon la revendication précédente, dans lequel l'unité de contrôle (8) est agencée pour déterminer une consigne de régime (P71) du premier moteur (41) à partir de ladite commande requise via l'organe de contrôle (71) du premier groupe motopropulseur et pour appliquer simultanément lesdites consignes de régime (P71, P72) déterminées respectivement au premier et au deuxième moteurs (41, 42).

3. Système (2) selon la revendication précédente, dans lequel, lorsque les commandes requises via les organes de contrôle (71, 72) sont identiques, l'unité de contrôle (8) est agencée pour déterminer ladite consigne de régime (P72) du deuxième moteur (42) de sorte que le régime du deuxième propulseur (32) soit sensiblement identique à celui du premier propulseur (31).

4. Système (2) selon l'une des revendications précédentes, **caractérisé en ce qu'**il comporte une unité de production d'énergie électrique (91) à partir du premier groupe motopropulseur, et dans lequel l'unité de contrôle (8) est agencée pour déterminer ladite consigne de régime (P72) du deuxième moteur (42) en fonction du couple résistant résultant de la charge exercée par l'unité de production d'énergie électrique sur le premier groupe motopropulseur.

5. Système (2) selon l'une des revendications précédentes, dans lequel l'unité de contrôle (8) comporte une mémoire (81) dans laquelle sont stockés au moins deux modèles (MT1, MT2, MT3) distincts de régime du premier propulseur (31) en fonction de la valeur d'une commande requise via l'organe de contrôle (71) du premier groupe motopropulseur, dans lequel l'unité de contrôle est agencée pour sélectionner l'un desdits modèles de régime du premier propulseur à partir du régime (RPM41) du premier propulseur (31) estimé par la première unité d'acquisition (61) et de ladite commande requise via l'organe de contrôle du premier groupe motopropulseur et pour déterminer ladite consigne de régime (P72) du deuxième moteur (42) à partir du modèle de régime du premier propulseur sélectionné et de ladite commande requise via l'organe de contrôle (72) du deuxième groupe motopropulseur.

6. Système (2) selon la revendication précédente, **caractérisé en ce qu'**il comporte une deuxième unité d'acquisition (62) apte à estimer un régime (RPM42) du deuxième propulseur (32), dans lequel au moins deux modèles (ME1, ME2) distincts de régime du deuxième propulseur en fonction de la valeur d'une commande requise via l'organe de contrôle (72) du deuxième groupe motopropulseur sont stockés dans la mémoire (81) de l'unité de contrôle (8), dans lequel l'unité de contrôle est agencée pour sélectionner l'un desdits modèles de régime du deuxième propulseur à partir du régime du deuxième propulseur estimée par la deuxième unité d'acquisition et pour déterminer ladite consigne de régime (P72) du deuxième moteur (42) à partir du modèle de régime (MT1, MT2, MT3) du premier propulseur (31) sélectionné, du modèle de régime du deuxième propulseur sélectionné et de ladite commande requise via l'organe de contrôle du deuxième groupe motopropulseur.

7. Système (2) selon l'une des revendications 6 ou 7, dans lequel la première unité d'acquisition (61) est agencée pour estimer de façon périodique le régime (RPM41) du premier propulseur (31) et pour transmettre ledit régime estimé à l'unité de contrôle (8), et dans lequel l'unité de contrôle est agencée pour déterminer si le doublet (P71-RPM41) formé par ledit régime estimé et par ladite commande requise via l'organe de contrôle (71) du premier groupe motopropulseur correspond à l'un des modèles de régime (MT1, MT2, MT3) du premier propulseur stockés dans sa mémoire (81) et pour, en cas de correspondance, sélectionner ledit modèle de régime correspondant stocké dans sa mémoire, et pour, dans le cas contraire, déclencher un apprentissage d'un nouveau modèle de régime du premier propulseur et stocker ledit nouveau modèle de régime du premier propulseur dans sa mémoire.

8. Système (2) selon la revendication précédente, dans lequel l'unité de contrôle (8) est agencée pour mettre en œuvre un algorithme d'apprentissage automatique pour apprendre ledit nouveau régime du premier propulseur (31).

9. Système (2) selon l'une des revendications précédentes, dans lequel le premier moteur (41) est un moteur thermique et dans lequel le deuxième moteur (42) est un moteur électrique. Bateau (1) à motorisation hybride comportant un système de contrôle (2) de sa motorisation selon l'une des revendications précédentes.
